# EUROPÄISCHE PATENTSCHRIFT

(11) **EP 0 488 064 B1**
(45) Veröffentlichungstag und Bekanntmachung des Hinweises auf die Patenterteilung: **20.09.1995**
(21) Anmeldenummer: 91119907.3
(22) Anmeldetag: 22.11.1991
(51) Int. Cl.: F24D 9/00, F24D 5/10

(54) **Verfahren zum Beheizen von Gebäuden.**
Process for heating a building.
Procédé pour le chauffage d'un bâtiment.

(30) Priorität: 29.11.1990 DE 4037988
(43) Veröffentlichungstag der Anmeldung: 03.06.1992
(73) Patentinhaber: Vetter, Richard, D-31226 Peine (DE)
(72) Erfinder: Vetter, Richard, D-31226 Peine (DE)
(74) Vertreter: Depmeyer, Lothar

(56) Entgegenhaltungen:
- AT-B- 348 836
- DE-A- 1 454 548
- DE-A- 1 959 031
- DE-A- 2 158 442
- DE-A- 3 525 478

## Beschreibung

Die Erfindung betrifft ein Verfahrenen zum Beheizen von Gebäuden mit einem oder mehreren Räumen für Personen und dgl. und einer Verbrennungsgase erzeugenden intermittierend arbeitenden Kesselanlage, vorzugsweise zum Beheizen, insb. als Warmwasserkesselanlage, wobei die Kesselanlage verlassende Verbrennungsgase durch Raumheizkörper in Form von in Schlangenlinien verlegten Rohren hindurchgeführt werden.

Die Verbrennungsgase durch Raumheizkörpern zu führen, sie dadurch zu kühlen und zur Raumheizung zu nutzen, ist aus der DE-A-1 959 031 bekannt. Die Heizanlage ist in diesem Falle ein Außenwandofen, welcher in einem Raum einer Wohnung aufgestellt ist. Die Verbrennungsgase aus diesem Ofen durchlaufen mehrere hintereinandergeschaltete Heizkörper in den weiteren Räumen der Wohnung.

In der DE-A-1 959 031 wird davon ausgegangen, daß in den erwähnten Raumheizkörpern und den zugehörigen Rohrleitungen kein Kondenswasser entsteht; der Abfluß von Kondenswasser ist hier nur im Endbereich der Anlage im letzten der durch sie beheizten Räume möglich. In den übrigen Räumen können die Verbrennungsgase nur soweit gekühlt werden, daß noch keine Kondensation eintritt. Die Heizung nach DE-A-1 959 031 kann daher nur einen Teil der in den Verbrennungsgasen enthaltenen Energie nutzen.

Wenn die Verbrennungsgase durch einfache Heizkörper geleitet werden, ergibt sich zudem das Problem, daß zwar eine gleichmäßige Wärmeabgabe wünschenswert ist, die Verbrennungsgase wegen des intermittierenden Betriebes der Heizungsanlage jedoch schubweise anfallen. Eine gleichmäßigere Abgabe der Wärme ermöglichen solche Heizkörper, welche die Eigenschaft haben, Wärme zu speichern und verzögert abzugeben, was durch ihre enge Einbindung in das Mauerwerk des Gebäudes erreicht werden kann. Derartige Einrichtungen sind aus der DE-A-1 454 548 bekannt, nach der eine Vorrichtung zur Raumheizung bzw. -Klimatisierung in der Wand angeordnete kanalartige Hohlräume aufweist, welche von Luft durchströmt werden.

Der Erfindung liegt die Aufgabe zugrunde, eine noch weitergehende Nutzung der in den Verbrennungsgasen enthaltenen Wärme zu ermöglichen, wobei zugleich die Tatsache berücksichtigt wird, daß die Verbrennungsgase nicht ständig, sondern nur in mehr oder weniger regelmäßigen Abständen entstehen, während die Wärmezufuhr bei einer Heizung in unregelmäßigen Zeitabständen ungünstig ist.

Diese Aufgabe wird erfindungsgemäß dadurch gelöst, daß die Kesselanlage mit einer Temperatur von weniger als 70°C verlassende Verbrennungsgase zum Kondensieren durch in Böden oder Decken von Gebäuden eingebettete Rohre als Röhrenwärmespeicher und hierin über gestautes Kondensat bis zum Abzug zur Abkühlung der Verbrennungsgase bis auf etwa Raumtemperatur geleitet werden.

Wichtig ist hierbei zunächst, daß mit der Abkühlung der Verbrennungsgase auf die vorgenannten Temperaturen der erwähnte Wärmespeicher unter Verwendung von geeigneten und daher chemisch beständigen Kunststoffen hergestellt werden kann. Zugleich bedeutet das Vorhandensein eines Wärmespeichers, daß die in den Verbrennungsgasen enthaltene Wärme auch dann genutzt werden kann, wenn sie nicht regelmäßig, sondern in Schüben anfällt. Der Speicher nimmt die unregelmäßig anfallenden Wärme auf und gibt sie im wesentlichen gleichmäßig wieder ab. Zugleich wird aber der besondere Vorteil erreicht, daß einen praktisch vollkommene Wärmeausnutzung der der Kesselanlage des Gebäudes zugeführten Brennstoffe möglich ist, da die Abkühlung der Verbrennungsgase praktisch bis auf die Raumtemperatur stattfindet.

Die Ausbildung des Röhrenwärmespeichers kann dabei an sich beliebig gewählt werden, vorzugsweise wird dieser Wärmespeicher jedoch unter Verwendung von Kunststoffrohren gebildet, und zwar im Zusammenhang mit geeigneten zur Wärmespeicherung befähigten Werkstoffen, z.B. Mauerwerk, Beton oder Steinen. Eine besonders geeignete und vorteilhafte Möglichkeit ist dann gegeben, wenn die zum Ableiten der Verbrennungsgase dienenden Rohre (vorzugsweise Kunststoffrohre) in Gebäudeecken oder Gebäudewandungen eingefügt und z.B. dort eingegossen oder eingemauert werden. Dabei ist es auch möglich, die zum Ableiten der Verbrennungsgase dienenden Rohre nachträglich in die Gebäuderäume einzubringen und mit den erwähnten Stoffen zu einem Röhrenwärmespeicher zu vereinigen.

Da vorzugsweise beständige Kunststoffe für die Ableitung der Verbrennungsgase benutzt werden, kann in den Röhrenwärmespeichern ohne Schaden eine Kondensation eintreten, ohne befürchten zu müssen, daß das Vorhandensein schädlicher Stoffe zu Beschädigungen führt.

Die Ansammlung von Kondensat innerhalb der Wärmespeicher erhöht den Effekt der Wärmespeicherung, weil das temperierte Wasser zur Wärmeabgabe geeignet ist.

Die Kunsstoffrohre können in ähnlicher Weise gestaltet sein, wie dies aus der AT-A-348 836 für Rohre von Abwasser- und Warmwasserleitungen bekannt ist.

Weitere Einzelheiten der Erfindung werden anhand der Zeichnung erläutert, in der Ausführungsbeispiele der Erfindung dargestellt sind.

Es zeigen:
- Fig. 1: eine Warmwasserheizungsanlage für ein Wohn- oder Produktionsgebäude in schematischer Darstellung,
- Fig. 2: eine abgewandelte Rohrverlegung für einen Röhrenwärmespeicher,
- Fig. 3: einen Teilschnitt durch eine Gebäudedecke,
- Fig. 4: die Zusammenfügung von Rohrabschnitten für einen Röhrenwärmespeicher und
- Fig. 5: einen von einem Rohrstrang durchsetzten Speicher im Querschnitt.

Der für die Warmwasserbereitung der Gebäudeheizung vorgesehene Kessel 1 hat einen Eintritt 2 für das mit etwa 60° C anfallende Wasser der Heizung. Es gelangt über einen Wärmeaustauscher 3 innerhalb des Kessels 1 zum Austritt bei 4 und wird dann den Heizkörpern in dem Gebäude zugeleitet.

Die Befeuerung erfolgt über einen Gas- oder Ölbrenner 7'; die Verbrennungsgase verlassen den Kessel 1 unten bei 5. Hier kann sich ein Sauggebläse 6 befinden. Unten im Kessel 1 kann ferner eine Neutralisationskammer für das aufgrund der Verbrennungsgase anfallende Kondensat vorgesehen werden. Diese Gase verlassen den Kessel 1 mit etwa 60° C. Werden allerdings die Verbrennungsgase vor ihrem Austritt aus dem Kessel 1 noch über einen weiteren Wärmetauscher 7 geleitet, der durch die dem Brenner 7' zuzuführende Verbrennungsluft gekühlt wird, so beträgt die Temperatur der Verbrennungsgase bei 5 etwa 40° C.

Der Ventilator 6 drückt die Verbrennungsgase nunmehr in einen ersten Wärmespeicher 9, worauf die Verbrennungsgase in einen zweiten Röhrenwärmespeicher 10 gelangen, Am Ausgang dieses Speichers kann sich ein zweiter Ventilator und auch eine Neutralisierungsvorrichtung befinden, schliesslich ggfs. noch ein besonderer Abfluss für das Kondensat, und ferner ein Austritt 11 für die Verbrennungsgase in unschädlicher Eigenschaft, allerdings aufgrund der Abkühlung in den beiden Röhrenwärmespeichern 9, 10 mit einer dem Raum ( in dem die beiden Wärmespeicher angeordnet sind ) entsprechenden Temperatur, die etwa 20° C beträgt.

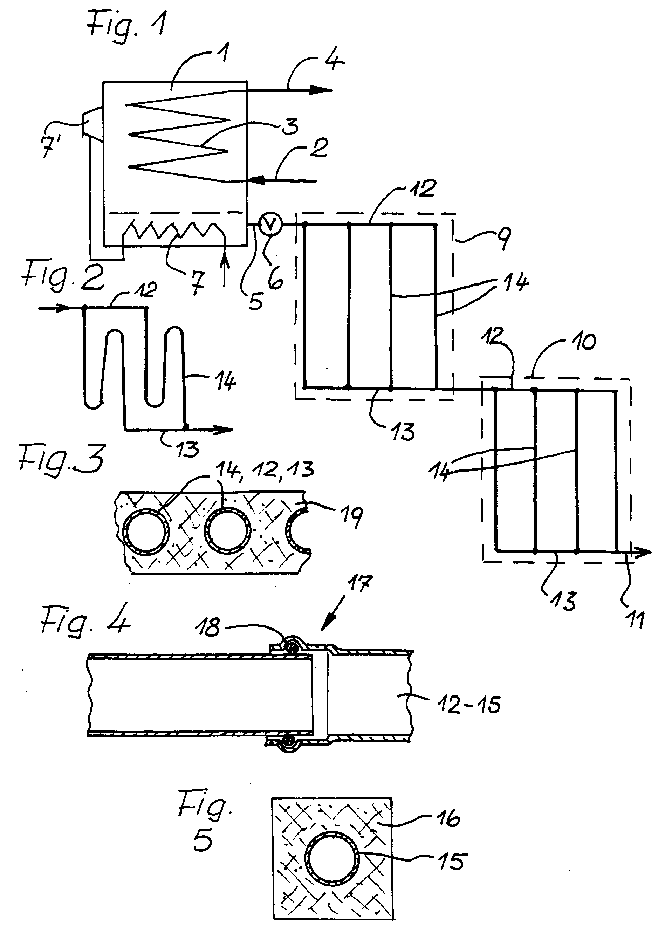

Beide Wärmespeicher 9, 10 haben einen Zulauf 12 und einen Ablauf 13, die durch mehrere einander parallel geschaltete Rohre 14 in Verbindung stehen. Diese Rohre 14 können gestreckt verlaufen, aber auch gemäss Fig. 2 hin und her verlegt sein, aber auch andere Gestaltungen haben, wobei allerdings darauf zu achten ist, dass die parallel geschalteten Rohre 14 durchflussmässig und auch wärmetechnisch praktisch einander entsprechen müssen, um Konzentrationen an einem oder zwei Rohren 14 auszuschalten.

Wichtig ist nun, dass die Zuläufe 12, die Abläufe 13 und die Rohre 14 in umittelbarem Kontakt zu einer wärmespeichernden Masse sind. Dies wird gemäss Fig. 1 und 2 dadurch erreicht, dass die Rohre 12, 13, 14 in Beton 19 oder in ein Mauerwerk ( aus Ziegein od dgl. ) eingebracht bzw. eingegossen sind. Eine einlagige Rohranordnung kann gemäss Fig. 3 ausgeführt sein. Es ist aber auch möglich, gemäss Fig. 5 ein Einzelrohr 15 mit einer wärmespeichernden Umkleidung 16 versehen sein.

Die niedrige Temperatur der Verbrennungsgase in den Rohren 12 - 15 ermöglicht die Verwendung von Kunststoffrohren, die aufgrund ihrer Werkstoffwahl gegen die in den Verbrennungsgasen vorhandenen Schadstoffe beständig sind. Ihre Verbindungen können gemäss Fig. 4 Muffensteckverbindungen 17 sein, die durch O-Ringdichtungen 18 abgedichtet sind.

Für den Fall, dass die Verbrennungsgase den Kessel 1 mit einer Temperatur nahe oberhalb des Taupunktes verlassen, erfolgt in den Rohren des Wärmespeichers eine Kondensation und eine Ableitung des Kondensats und der Gase über die Rohre. Für diesen Fall ist eine Neütralisationsstufe am Ende der Rohrleitungen zweckmässig.

Sollte der Röhrenwärmespeicher nicht unmittelbar zur Beheizung der Räume des Gebäudes dienen können, wie dies bei einem Einbau in Decken, Böden und Wendungen der Fall ist, so versteht es sich, dass eine geeignete Anordnung der Röhrenwärmespeicher in den Räumen erfolgen muss, um deren Heizwirkung voll nutzen zu können.

## Patentansprüche

1. Verfahren zum Beheizen von Gebäuden mit einem oder mehreren Räumen für Personen und dgl. und einer Verbrennungsgase erzeugenden intermittierend arbeitenden Kesselanlage, vorzugsweise zum Beheizen, insb. als Warmwasserkesselanlage, wobei die Kesselanlage verlassende Verbrennungsgase durch Raumheizkörper in Form von in Schlangenlinien verlegten Rohren hindurchgeführt werden, dadurch gekennzeichnet, dass die Kesselanlage mit einer Temperatur von weniger als etwa 70° C verlassende Verbrennungsgase zum Kondensieren durch in Böden oder Decken von Gebäuden eingebettete Rohre als Röhrenwärmespeicher und hierin über gestautes Kondensat bis zum Abzug zur Abkühlung der Verbrennungsgase bis auf etwa Raumtemperatur geleitet werden.

2. Verfahren nach Anspruch 1, dadurch gekennzeichnet, dass die Verbrennungsgase bzw. ihr Kondensat nach ihrem Durchlauf durch den bzw. die Röhrenwärmespeicher neutralisiert werden.

3. Verfahren nach Anspruch 1, dadurch gekennzeichnet, dass die Verbrennungsgase auf etwa 20° C abgekühlt werden und so den bzw. die Röhrenwärmespeicher verlassen.

4. Verfahren nach Anspruch 1, dadurch gekennzeichnet, dass die Verbrennungsgase in der Kesselanlage auf etwa 40 - 60° C abgekühlt und so die Kesselanlage verlassen.

## Claims

1. Method of heating buildings having one or a plurality of rooms for persons and the like and an intermittently operating boiler system, which produces combustion gases, preferably for heating purposes, more especially serving as a hot-water boiler system, combustion gases which leave the boiler system being guided through room heaters in the form of pipes laid in undulatory lines, characterised in that combustion gases, which leave the boiler system with a temperature of less than substantially 70° C, are conducted, for condensing purposes, through pipes embedded in floors or ceilings of buildings and serving as storage heaters having pipes and are conducted herein over dammed condensate as far as the outlet for cooling the combustion gases down to substantially ambient temperature.

2. Method according to claim 1, characterised in that the combustion gases, or respectively their condensate, are neutralised after they have passed through the storage heater or heaters having pipes.

3. Method according to claim 1, characterised in that the combustion gases are cooled down to substantially 20° C and thus leave the storage heater or heaters having pipes.

4. Method according to claim 1, characterised in that the combustion gases are cooled in the boiler system down to substantially 40 - 60° C and thus leave the boiler system.

## Revendications

1. Procédé pour chauffer des bâtiments comportant une ou plusieurs pièces pour des personnes et analogues, ainsi qu'une chaufferie produisant des gaz de combustion et travaillant de façon intermittente, de préférence pour le chauffage, utilisée notamment en tant que chaufferie produisant de l'eau chaude, le gaz de combustion quittant la chaufferie circulant dans des radiateurs se présentant sous la forme de tubes disposés suivant des lignes en serpentin, caractérisé par le fait que des gaz de combustion, qui quittent la chaufferie à une température inférieure à environ 70°C, sont envoyés, pour leur condensation, dans des tubes insérés dans des planchers ou dans des toits ou plafonds de bâtiments en tant qu'accumulateurs tubulaires de chaleur et, à l'intérieur de ces tubes, sont dirigés, à travers du condensat accumulé, jusqu'à la cheminée pour le refroidissement des gaz de combustion approximativement jusqu'à la température ambiante.

2. Procédé suivant la revendication 1, caractérisé par le fait que le gaz de combustion ou leur condensat sont neutralisés après leur traversée dans le ou les accumulateurs tubulaires de chaleur.

3. Procédé suivant la revendication 1, caractérisé par le fait que les gaz de combustion sont refroidis à environ 20°C et quittent ainsi le ou les accumulateurs tubulaires de chaleur.

4. Procédé suivant la revendication 1, caractérisé par le fait que les gaz de combustion sont refroidis dans la chaufferie à environ 40-60°C et quittent ainsi la chaufferie.
